# EUROPEAN PATENT SPECIFICATION

(11) **EP 2 838 206 B1**
(45) Date of publication and mention of the grant of the patent: **26.07.2017**
(21) Application number: 13775985.8
(22) Date of filing: 05.04.2013
(51) Int. Cl.: H04B 1/38, H04M 1/06, B60R 11/02, H04M 1/04

(54) **SATELLITE TERMINAL CRADLE**
SATELLITENENDGERÄTESTATION
BERCEAU DE TERMINAL SATELLITE

(30) Priority: 13.04.2012 KR 20120038330
(43) Date of publication of application: 18.02.2015
(73) Proprietor: Asia Pacific Satellite-Communications Inc., Geumcheongu Seoul 153-768 (KR)
(72) Inventor: PARK, Jong In, Seoul 158-752 (KR)
(74) Representative: Algemeen Octrooi- en Merkenbureau B.V.
(86) International application number: PCT/KR2013/002855
(87) International publication number: WO 2013/154302

(56) References cited:
- DE-A1- 10 201 612
- DE-A1-102008 005 589
- DE-U1- 29 903 958
- KR-A- 20020 056 920
- KR-A- 20060 008 605
- KR-B1- 100 608 779
- KR-B1- 100 609 427
- US-A1- 2005 277 398
- Julie Strietelmeier: "SmallWorks BrickCase for iPhone 4 Review", , 22 January 2011 (2011-01-22), XP055226129, Retrieved from the Internet: URL:http://the-gadgeteer.com/2011/01/22/sm allworks-brickcase-for-iphone-4-review/ [retrieved on 2015-11-05]

## Description

### Technical Field

The present invention relates to a cradle for satellite terminals, and more particularly, to a cradle for satellite terminals, which has an improved structure to allow an existing cradle to be replaced by a new cradle such that the new cradle can be used for an existing satellite terminal when a smartphone terminal is changed.

### Background Art

A satellite terminal using a satellite as a communication means has been widespread since it has an advantage of making a call regardless of locations such as the sea, the sky, mountains, valleys, etc.

A general satellite communication terminal includes a satellite antenna, a satellite communication module for performing satellite communication, a controller for controlling operation of the satellite communication terminal, a key input unit for receiving an operation signal from a user, a display for displaying an operating state, a microphone for detecting a user voice signal, a loudspeaker for outputting a voice signal to a user, and a memory for storing program information of the satellite communication terminal, user setting information, phone numbers, etc.

Recently, there has been proposed a combination terminal achieved by adding a wireless communicator to a satellite terminal such that a terrestrial communication network can be used for communication.

With recent development of technology, a mobile terminal using the terrestrial communication network has been rapidly developed and a smartphone has been rapidly introduced as a new mobile terminal which provides advantages of a mobile terminal mainly used for making a call and a personal mobile terminal (e.g., a personal digital assistant (PDA)).

Such a smartphone enables schedule management, data communication such as facsimile transmission and Internet access, and multimedia function in addition to a general call function. On the contrary to existing mobile terminals which are released as complete products and employ only given functions, the smartphone is capable of adding or deleting hundreds of various applications as desired by a user.

Further, there have recently been proposed technologies of using a smartphone for satellite communication by combining the smartphone and a satellite terminal and installing an interface for satellite communication.

To this end, a cradle is used to physically combine and fasten the smartphone with the satellite terminal.

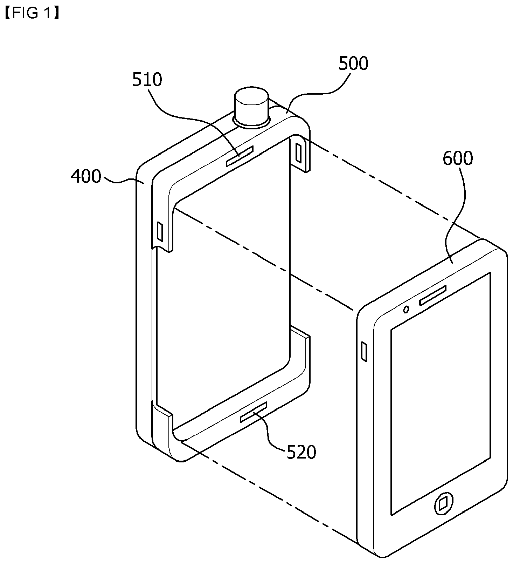

Fig. 1 is a view of a satellite terminal with a typical cradle. As shown therein, a satellite terminal 400 is provided at a front lower portion thereof with a microphone 520 receiving a caller's voice and at a front upper portion thereof with a loudspeaker 510 outputting voice to the caller. Further, a cradle 500 is integrally placed on the front side of the satellite terminal 400 such that a smartphone 600 can be physically coupled to the cradle 500.

However, the cradle 500 integrally formed with the satellite terminal 400 is limited by a shape of a certain terminal and thus has a problem in that another smartphone having a different shape from that of the cradle 500 cannot be supported and used on the cradle 500 of the satellite terminal 400.

In addition, when a user has a new smartphone 600, there is a problem in that the old satellite terminal cannot be used.

Moreover, since various models of the satellite terminal 400 having the cradle 500 of various shapes are supplied, there are problems such as a complicated manufacturing process and increase in manufacturing costs.

The background technique of the present invention is disclosed in Korean Utility Model Publication No. 1997-012567A.

DE 10 2008 005589 A1 discloses a retaining device for retaining a portable electronic device in a vehicle. The retaining device comprises an upper part arranged for receiving the portable device, such as a mobile telephone, and a lower part adapted to a particular model of an electronic device. The upper and lower part comprise mating electric coupling means.

DE29903958U1 discloses a station having a housing arranged for receiving a cordless telecommunication terminal, wherein the housing comprises latching brackets and grooves, designed for coupling the housing to a wired telecommunication terminal.

"SmallWorks BrickCase for iPhone 4 Review", 22 January 2011, Julie Strietelmeier, available on the Internet, discloses a brickcase for receiving an Iphone 4® smartphone, which brickcase has LEGO® compatible posts at the back.

### Disclosure

### Technical Problem

The present invention has been conceived to solve such problems in the art and it is an aspect of the present invention to provide a cradle for satellite terminals, which has an improved structure to allow an existing cradle to be replaced by a new cradle such that the new cradle can be used for an existing satellite terminal when a smartphone terminal is changed.

### Technical Solution

In accordance with the present invention, there is provided a cradle for satellite terminals, comprising: a first cradle, provided to a satellite terminal adapted for mobile phone communication over satellites, and formed with at least one coupling block; and a second cradle, arranged for receiving a smartphone terminal, and formed at one side thereof with a block coupling portion to be coupled to the coupling block of the first cradle, characterized in that the first cradle comprises a first cradle body, a microphone portion protruding from a lower portion of the first cradle body, and a loudspeaker portion protruding from an upper portion of the first cradle body.

The coupling block of the first cradle may comprise a block protruding from an outer surface of the first cradle body and having a convex-concave pattern

The second cradle may include a second cradle body formed with a smartphone receiving recess on which a smartphone terminal is to be seated; and the block coupling portion is formed with a plurality of coupling holes at one side of the second cradle body such that the block is inserted into the block coupling portion.

The second cradle may include a microphone portion receiving groove formed at a lower portion of the second cradle body and receiving the microphone portion; and a loudspeaker portion receiving groove formed at an upper portion of the second cradle body and receiving the loudspeaker portion.

The fitting grooves and the fitting bosses may be arranged to have preset spaces in length and breadth directions on the first cradle and the auxiliary device so as to be press-fitted in a fitting manner of Legos®.

Each of the fitting bosses may have an oblique fitting face formed along a circumferential edge thereof so as to be easily fitted into the fitting groove, and each of the fitting grooves may have an oblique receiving face formed along an inner circumferential edge thereof corresponding to the oblique fitting face so as to easily receive the fitting boss.

The first cradle may be coupled to the second cradle by an auxiliary coupler, and the auxiliary coupler may include at least one auxiliary fitting groove formed on the rear surface of the first cradle, and an auxiliary fitting boss formed on a front surface of the second cradle to be fitted into the auxiliary fitting groove.

Each of the cradle and the auxiliary device may be formed with a separation groove on a lateral side thereof to facilitate separation of the cradle from the auxiliary device.

The cradle may be formed with a disassembly groove helping separation of the smartphone terminal.

### Advantageous Effects

According to the present invention, when a smartphone terminal is changed, only an existing cradle can be replaced by a new cradle such that the new cradle can be used for an existing satellite terminal.

### Description of Drawings

Fig. 1 is a perspective view of a satellite terminal with a conventional cradle.
Fig. 2 is an exploded perspective view of a cradle for satellite terminals according to a first embodiment of the present invention.
Fig. 3 is an assembled perspective view of the cradle for satellite terminals according to the first embodiment of the present invention.
Fig. 4 is an exploded perspective view of a cradle for satellite terminals according to a second embodiment of the present invention.
Fig. 5 is an assembled perspective view of the cradle for satellite terminals according to the second embodiment of the present invention.
Fig. 6 is a cross-sectional view taken along line A-A of Fig. 5.
Fig. 7 is a cross-sectional view taken along line B-B of Fig. 5.

### Best Mode

Hereinafter, embodiments of the present invention will be described in detail with reference to the accompanying drawings. It should be noted that the drawings are not to precise scale and may be exaggerated in thickness of lines or size of components for descriptive convenience and clarity only. In addition, the terms used herein are defined by taking functions of the present invention into account and can be changed according to user or operator custom or intention. Therefore, definition of the terms should be made according to the overall disclosure set forth herein.

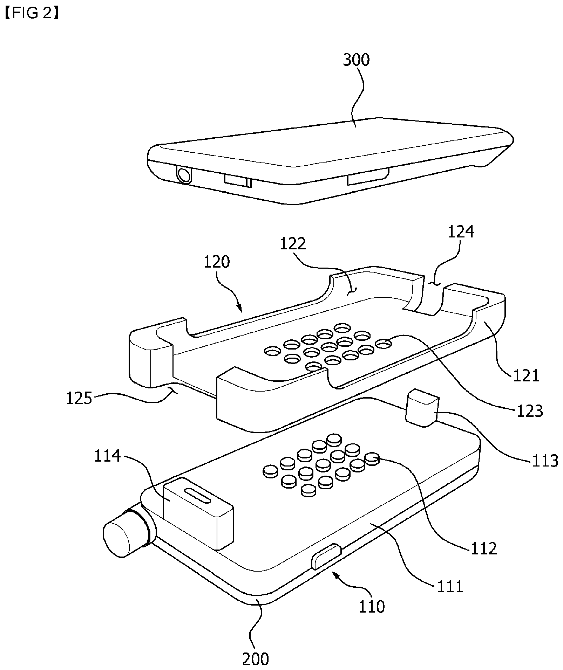

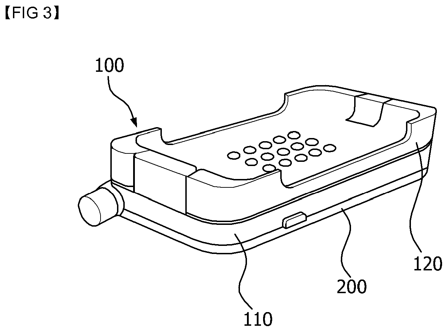

Fig. 2 is an exploded perspective view of a cradle for satellite terminals according to a first embodiment of the present invention, and Fig. 3 is an assembled perspective view of the cradle for satellite terminals according to the first embodiment of the present invention.

Referring to Figs. 2 and 3, a cradle for satellite terminals 100 according to a first embodiment includes a first cradle 110 and a second cradle 120.

The first cradle 110 is provided to a satellite terminal 200 such that the second cradle 120 can be selectively attached to and detached from the first cradle 110. The first cradle 110 includes a first cradle body 111, blocks 112, a microphone portion 113, and a loudspeaker portion 114.

The first cradle body 111 is a member having a rectangular shape, which forms an outer casing of the satellite terminal 200.

The blocks 112 are convex-concave patterns protruding a predetermined length from the outer surface of the first cradle body 111 and are formed at regular intervals.

The microphone portion 113 is formed by disposing a microphone (not shown) of the satellite terminal 200 to protrude a predetermined length and be placed at a lower portion of the first cradle body 111 such that the microphone can be placed near a user after installation of the second cradle 120.

In addition, the microphone portion 113 is partially coupled to a lower portion of the second cradle 120 fastened to the first cradle through the blocks 112, thereby preventing the second cradle 120 from shaking.

The loudspeaker portion 114 is formed by disposing a loudspeaker (not shown) of the satellite terminal 200 to protrude a predetermined length and be placed at an upper portion of the first cradle body 111 such that the loudspeaker can be placed near a user after installation of the second cradle 120.

In addition, the loudspeaker portion 114 is partially coupled to an upper portion of the second cradle 120 fastened to the first cradle through the blocks 112, thereby preventing the second cradle 120 from shaking.

The second cradle 120 supports a predetermined smartphone terminal 300 to be held by the satellite terminal 200. The second cradle 120 is formed of a plastic resin, and includes a second cradle body 121, a smartphone receiving recess 122, a block coupling portion 123, a microphone portion receiving groove 124 and a loudspeaker portion receiving groove 125.

The second cradle body 121 is a plate member having a rectangular shape and formed with the smartphone receiving recess 122 such that the smartphone terminal 300 having a predetermined shape along the circumferential edge thereof can be seated thereon.

The smartphone receiving recess 122 is formed in a predetermined size and is open forwards such that the smartphone terminal 300 can be seated thereon.

A plurality of block coupling portions 123 is formed through the second cradle body 121 at locations corresponding to the blocks 112 so as to be coupled to the plurality of blocks 112 formed on the first cradle body 111.

That is, the block coupling portions 123 are press-fitted into the blocks 112 formed on the first cradle body 111 such that the second cradle 120 can be secured to the first cradle 110.

The microphone portion receiving groove 124 allows the microphone portion 113 of the first cradle 110 to be placed at the lower portion of the second cradle body 121, whereby the microphone portion 113 can be disposed to penetrate the second cradle body 121 while more firmly supporting the second cradle 120.

The loudspeaker portion receiving groove 125 allows the loudspeaker portion 114 of the first cradle 110 to be placed at the upper portion of the second cradle body 121, whereby the loudspeaker portion 114 can be disposed to penetrate the second cradle body 121 while being brought into close contact with the second cradle 120 to prevent the second cradle from shaking and more firmly supporting the first cradle 110 together with the microphone receiving groove 124.

Next, a process of assembling the cradle for satellite terminals according to the first embodiment of the present invention will be described. In the cradle 100 for satellite terminals, the first cradle 110 is provided to the satellite terminal 200 for satellite communication and is formed with the plurality of blocks 112 having a plurality of convex-concave patterns at the center thereof.

In use of a certain smartphone terminal 300 held by the satellite terminal 200, the smartphone terminal 300 is seated on the second cradle 120, which in turn is closely attached to the first cradle 110 such that the blocks 112 can be press-fitted into the block coupling portions 123.

In addition, for more firm coupling, the microphone portion receiving groove 124 and the loudspeaker portion receiving groove 125 of the second cradle 120 are brought into close contact with the microphone portion 113 and the loudspeaker portion 114 of the first cradle 110, respectively.

Then, when a user's smartphone terminal 300 is replaced by a new smartphone terminal, an existing second cradle 120 is separated and a new second cradle 120 for holding the new smartphone terminal is attached to the first cradle 110, whereby the new smartphone terminal 300 can be supported and used on the satellite terminal 200.

Although the smartphone terminal is changed, the smartphone terminal can be used on the satellite terminal, regardless of the shape of the smartphone terminal, by replacing only the second cradle made of a plastic material.

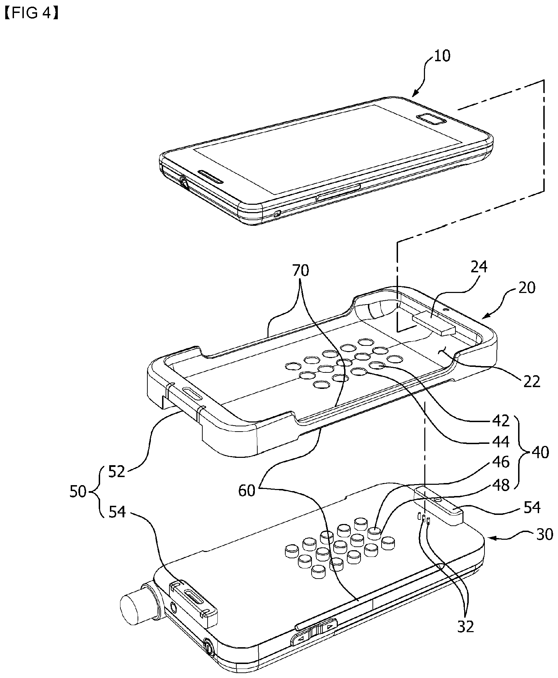

Next, a cradle for satellite terminals according to a second embodiment of the present invention will be described in detail with reference to Figs. 4 to 7.

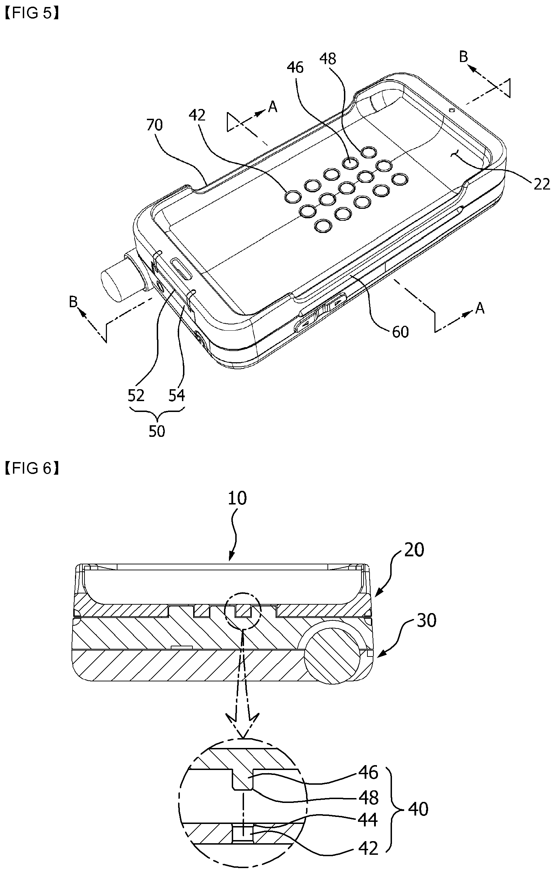

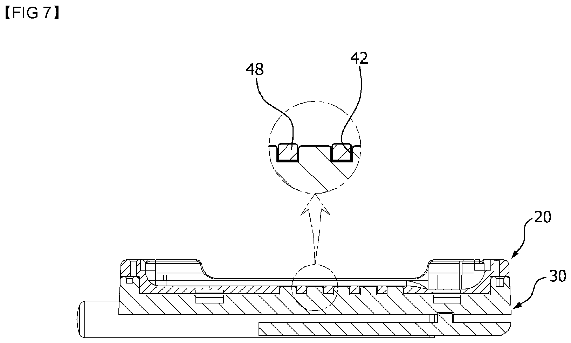

Fig. 4 is an exploded perspective view of a cradle for satellite terminals according to a second embodiment of the invention; Fig. 5 is an assembled perspective view of the cradle for satellite terminals according to the second embodiment of the invention; Fig. 6 is a cross-sectional view taken along line A-A of Fig. 5; and Fig. 7 is a cross-sectional view taken along line B-B of Fig. 5.

Referring to Figs. 4 to 7, a cradle for satellite terminals according to a second embodiment of the invention includes a first cradle 20, a second cradle 30, and a coupler 40.

The first cradle 20 includes an accommodating space 22 in which a smartphone terminal 10 is accommodated, and is formed in different shapes depending upon the kind of smartphone terminal 10. The first cradle 20 is disposed between the smartphone terminal 10 and the second cradle 30.
The first cradle 20 may have various front structures corresponding to different shapes of the accommodating spaces 22 depending upon the kinds, models and manufacturers of smartphone terminals 10.

However, a rear structure of the first cradle 20 is not changed since the second cradle 30 will be universally used.

The second cradle 30 has a rear surface, on which the first cradle 20 formed in different shapes depending upon the kind of smartphone terminal 10 is stably supported, and supplies power or various electric signals to various smartphone terminals 10.

The second cradle 30 can receive a high-capacity battery, a digital multimedia broadcasting (DMB) unit, and the like.

Since the rear structure of the first cradle 20 is not changed even though the front structure of the first cradle 20 is changed corresponding to the smartphone terminal 10, it is possible to achieve universal use of the second cradle 30 corresponding to one model.

That is, the first cradle 20 is a very inexpensive component formed of a plastic material and can be immediately changed and manufactured when version-up of the smartphone terminal 10 is achieved. At this time, since the rear structure of the first cradle 20 is not changed even in the case where the front structure thereof is changed, the version-up first cradle 20 can be directly coupled to the universally usable second cradle 30 and used.

The coupler 40 couples the first cradle 20 to the second cradle 30.

The coupler 40 includes a plurality of fitting grooves 42 formed on the rear surface of the first cradle 20 and a plurality of fitting bosses 46 formed on the second cradle 30 so as to be press-fitted into the fitting grooves 42.

The fitting grooves 42 and the fitting bosses 46 are arranged to have preset spaces in length and breadth directions on the first cradle 20 and the auxiliary device 30 so as to be press-fitted in a fitting manner of a set of Legos®.

The fitting grooves 42 may have a blind-hole shape open downward and blocked at an upper side thereof, or a through-hole shape penetrated vertically.

The fitting grooves 42 and the fitting bosses 46 may have a circular or polygonal cross-section. In this embodiment, the fitting grooves 42 and the fitting bosses 46 have a circular cross-section.

Each of the fitting bosses 46 has an oblique fitting face 48 formed along a circumferential edge thereof so as to be easily inserted into the fitting groove 42.

Each of the fitting grooves 42 has an oblique receiving face 44 formed along an inner circumferential edge thereof corresponding to the oblique fitting face 48 so as to easily receive the fitting boss 46.

That is, even though the fitting grooves 42 and the fitting bosses 46 are not aligned with each other when coupling the first cradle 20 and the second cradle 30 to each other, the oblique fitting face 48 and the oblique receiving face 44 serve to align the fitting grooves 42 and the fitting bosses 46 with each other such that the fitting grooves 42 and the fitting bosses 46 can be correctly assembled to each other.

Since the pluralities of fitting grooves 42 and fitting bosses 46 are coupled in a fitting manner of Lego toys, the fitting grooves and the fitting bosses are not easily separated, but can be conveniently separated when they have to be separated.
An outer diameter of the fitting bosses 46 is little larger than an inner diameter of the fitting grooves 42 such that the fitting bosses can be slightly press-fitted into the fitting grooves 42.

The first cradle 20 includes an auxiliary coupler 50 for secondarily fastening the second cradle 30.

The auxiliary coupler 50 includes at least one auxiliary fitting groove 52 formed on the rear surface of the first cradle 20, and an auxiliary fitting boss 54 formed on the front surface of the second cradle 30 so as to be fitted into the auxiliary fitting groove 52.

Two pairs of auxiliary fitting grooves 52 and auxiliary fitting bosses 54 may be formed on upper and lower sides of the first and second cradles 20, 30, respectively. Alternatively, a pair of auxiliary fitting groove and auxiliary fitting boss may be formed on the upper or lower side thereof, as needed.

Further, each of the first cradle 20 and the second cradle 30 is provided at a lateral side thereof with a separation groove 60 to facilitate separation of the first and second cradles 20, 30.

The separation groove 60 may be formed in a slit shape on one or both lateral sides of the first cradle 20 and the second cradle 30 such that a user's fingertip can be inserted into the separation groove.

The separation groove 60 may be formed only on one of the first cradle 20 and the second cradle 30.

The first cradle 20 is provided with a disassembly groove 70 that helps separation of the smartphone terminal 10.

The disassembly groove 70 is formed in a cutaway shape on one or both lateral sides of the first cradle 20.

Next, operation of the cradle for satellite terminals according to the second embodiment will be described with reference to the accompanying drawings.

First, first cradles 20 are separately fabricated according to the kind of smartphone terminal 10. In this case, the first cradle 20 is formed to have a rear structure corresponding to a second cradle 30 which will be universally used without replacement.

Among various first cradles 20, a first cradle 20 corresponding to a certain smartphone terminal 10 is coupled to the second cradle 30.

When the fitting bosses 46 of the second cradle 30 are inserted into the fitting grooves 42 of the first cradle 20, the oblique fitting faces 48 of the fitting bosses 46 slide along the oblique receiving face 44 of the fitting grooves 42 to allow the fitting bosses 46 to be coupled to the fitting grooves 42 as in a fitting manner of Lego toys.

Then, the smartphone terminal 10 is inserted into a front accommodating space 22 of the first cradle 20.

As such, when the smartphone terminal 10, the first cradle 20, and the second cradle 30 are coupled, a connector 24 of the first cradle 20 is connected to a charge terminal 32 of the second cradle 30, whereby power or electric signals can be supplied via the second cradle 30, the first cradle
20 and the smartphone terminal 10.
When the auxiliary fitting grooves 52 of the first cradle 20 and the auxiliary fitting bosses 54 of the second cradle 30 are coupled to each other, the first cradle 20 and the second cradle 30 can be more firmly coupled to each other.

After use of the smartphone, the first cradle 20 and the second cradle 30 can be separated by inserting a fingertip into the separation groove 60, and then the smartphone terminal 10 can be separated from the first cradle 20 by inserting a fingertip into the disassembly groove 70.

Although the present invention has been described with reference to some embodiments in conjunction with the accompanying drawings, it should be understood that these embodiments are provided for illustration of the present invention.

## Claims

1. A cradle (100) for terminals, comprising:
a first cradle (30; 110), provided to a satellite terminal (200) adapted for mobile communication over satellites, and formed with at least one coupling block (46, 54; 112); and
a second cradle (20; 120), arranged for receiving a smartphone terminal (10; 300), and formed at one side thereof with a block coupling portion (42, 52; 123) to be coupled to the coupling block (46, 54; 112) of the first cradle (30; 110),
**characterized in that** the first cradle (30; 110) comprises:
a first cradle body (111),
a microphone portion (54; 113) protruding from a lower portion of the first cradle body (111), adapted to fit into a receiving groove (124) formed at a lower portion of the second cradle body (121) and
a loudspeaker portion (54; 114) protruding from an upper portion of the first cradle body (111) adapted to fit into a receiving groove (124) formed at an upper portion of the second cradle body (121).

2. The cradle (100) according to claim 1, wherein the first cradle (30; 110) is an outer casing of the satellite terminal (300).

3. The cradle (100) according to claim 2, wherein the coupling block (112) of the first cradle (110) comprises a block protruding from an outer surface of the first cradle body (111) and having a convex-concave pattern.

4. The cradle (100) according to claim 1, wherein the second cradle (20; 120) comprises:
a second cradle body (121) formed with a smartphone receiving recess (22; 122) on which a smartphone terminal (10; 300) is to be seated; and
the block coupling portion (42; 123) is formed with a plurality of coupling holes at one side of the second cradle body (121) such that the block (46; 112) is inserted into the block coupling portion (42; 123).

5. The cradle (100) according to claim 4, wherein the second cradle (120) comprises:
a microphone portion receiving groove (124) formed at a lower portion of the second cradle body (121) and receiving the microphone portion (113); and
a loudspeaker portion receiving groove (124) formed at an upper portion of the second cradle body (121) and receiving the loudspeaker portion (114).

6. The cradle (100) according to any of the previous claims, wherein a smartphone terminal (10; 100) is accommodated in the first cradle (30; 110).

## Patentansprüche

1. Eine Halterung (100) für Endgeräte, umfassend:
eine erste Halterung (30; 110), bereitgestellt für ein Satelliten-Endgerät (200) eingerichtet zur mobilen Kommunikation über Satelliten, und gebildet mit zumindest einem Koppelblock (46, 54; 112); und
eine zweite Halterung (20; 120), eingerichtet zum Aufnehmen eines Smartphone-Endgeräts (10; 300), und gebildet auf einer Seite davon mit einem Blockkoppelabschnitt (42, 52; 123) zur Kopplung an den Koppelblock (46, 54;112) der ersten Halterung (30; 110),
**dadurch gekennzeichnet, dass** die erste Halterung (30; 110) umfasst:
einen ersten Halterungskörper (111),
ein Mikrofonabschnitt (54; 113) vorstehend von einem unteren Abschnitt des ersten Halterungskörpers (111), eingerichtet, um in einen Aufnahmeeinschnitt (124) gebildet an einem unteren Abschnitt des zweiten Halterungskörpers (121) zu passen und
einen Lautsprecherabschnitt (54; 114) vorstehend von einem oberen Abschnitt des ersten Halterungskörpers (111), eingerichtet, um in einen Aufnahmeeinschnitt (124) gebildet an einem oberen Abschnitt des zweiten Halterungskörpers (121) zu passen.

2. Die Halterung (100) gemäß Anspruch 1, wobei die erste Halterung (30; 110) eine äußere Hülle des Satelliten-Endgeräts (300) ist.

3. Die Halterung (100) gemäß Anspruch 2, wobei der Koppelblock (112) der ersten Halterung (110) umfasst
einen Block vorstehend von einer äußeren Oberfläche des ersten Halterungskörpers (111) und aufweisend ein konvex-konkaves Muster.

4. Die Halterung (100) nach Anspruch 1, wobei die zweite Halterung (20; 120) umfasst:
einen zweiten Halterungskörper (121) gebildet mit einer Smartphone-Aufnahmevertiefung (22; 122), auf die ein Smartphone-Endgerät (10; 300) zu setzen ist; und
der Blockkoppelabschnitt (42; 123) mit einer Mehrzahl von Koppellöchern auf einer Seite des zweiten Halterungskörpers (121) gebildet ist, so dass der Block (46; 112) eingefügt ist in den Blockkoppelabschnitt (42; 123).

5. Die Halterung (100) gemäß Anspruch 4, wobei die zweite Halterung (120) umfasst:
einen Mikrofonabschnitt-Aufnahmeeinschnitt (124) gebildet an einem unteren Abschnitt des zweiten Halterungskörpers (121) und den MikrofonAbschnitt (113) aufnehmend; und
einen Lautsprecherabschnitt-Aufnahmeeinschnitt (124) gebildet an einem oberen Abschnitt des zweiten Halterungskörpers (121) und den Lautsprecherabschnitt (114) aufnehmend.

6. Die Halterung (100) gemäß einem der vorherigen Ansprüche, wobei ein Smartphone-Endgerät (10; 100) in der ersten Halterung untergebracht ist (30; 110).

## Revendications

1. Berceau (100) pour terminaux, comprenant :
un premier berceau (30; 110), prévu sur un terminal satellite (200) adapté pour une communication mobile sur des satellites, et formé d'au moins un bloc de couplage (46, 54 ; 112) ; et
un deuxième berceau (20; 120), agencé pour recevoir un terminal de téléphone intelligent (10 ; 300), et formé au niveau d'un côté de celui-ci d'une partie de couplage de bloc (42, 52 ; 123) à coupler au bloc de couplage (46, 54 ; 112) du premier berceau (30 ; 110) ;
**caractérisé en ce que** le premier berceau (30 ; 110) comprend :
un corps de premier berceau (111),
une partie de microphone (54 ; 113) faisant saillie à partir d'une partie inférieure du corps de premier berceau (111), adaptée pour s'ajuster dans une rainure de réception (124) formée au niveau d'une partie inférieure du corps de deuxième berceau (121), et
une partie de haut-parleur (54 ; 114) faisant saillie à partir d'une partie supérieure du corps de premier berceau (111) adaptée pour s'ajuster dans une rainure de réception (124) formée au niveau d'une partie supérieure du corps de deuxième berceau (121).

2. Berceau (100) selon la revendication 1, dans lequel le premier berceau (30 ; 110) est un boîtier externe du terminal satellite (300).

3. Berceau (100) selon la revendication 2, dans lequel le bloc de couplage (112) du premier berceau (110) comprend un bloc faisant saillie à partir d'une surface externe du corps de premier berceau (111) et ayant un motif convexe-concave.

4. Berceau (100) selon la revendication 1, dans lequel le deuxième berceau (20 ; 120) comprend :
un corps de deuxième berceau (121) formé d'un évidement de réception de téléphone intelligent (22 ; 122) sur lequel un terminal de téléphone intelligent (10 ; 300) doit être situé ; et
la partie de couplage de bloc (42 ; 123) est formée d'une pluralité de trous de couplage au niveau d'un côté du corps de deuxième berceau (121) de sorte que le bloc (46 ; 112) soit inséré dans la partie de couplage de bloc (42 ; 123).

5. Berceau (100) selon la revendication 4, dans lequel le deuxième berceau (120) comprend :
une rainure de réception de partie de microphone (124) formée au niveau d'une partie inférieure du corps de deuxième berceau (121) et recevant la partie de microphone (113) ; et
une rainure de réception de partie de haut-parleur (124) formée au niveau d'une partie supérieure du corps de deuxième berceau (121) et recevant la partie de haut-parleur (114).

6. Berceau (100) selon l'une des revendications précédentes, dans lequel un terminal de téléphone intelligent (10 ; 100) est logé dans le premier berceau (30 ; 110).
